# EUROPÄISCHE PATENTSCHRIFT

(11) **EP 1 475 902 B1**
(45) Veröffentlichungstag und Bekanntmachung des Hinweises auf die Patenterteilung: **01.03.2006**
(21) Anmeldenummer: 04008069.9
(22) Anmeldetag: 02.04.2004
(51) Int. Cl.: H04B 3/54

(54) **Verfahren und System zur kombinierten Spannungsversorgung für Busgeräte**
Method and system for combined power supply of bus devices
Méthode et système de la distribution d'une puissance combinée pour des dispositifs de bus

(30) Priorität: 08.05.2003 DE 10320719
(43) Veröffentlichungstag der Anmeldung: 10.11.2004
(73) Patentinhaber: SIEMENS AKTIENGESELLSCHAFT, 80333 München (DE)
(72) Erfinder: Fichtner, Norbert, 84069 Schierling (DE)

(56) Entgegenhaltungen:
- EP-A- 0 325 960
- DE-A- 10 147 924
- "DC/DC Wandler in der Praxis" POWER SUPPLY, [Online] 4. Mai 2003 (2003-05-04), Seiten 1-7, XP002284783 Landsberg Gefunden im Internet: <URL:http://web.archive.org/web/2003050407 1128/http://www.fortecag.de/produkte/know_ how/power_supplies/dcdc_praxis.html> [gefunden am 2004-06-16]
- CHOI B ET AL: "DYNAMICS AND CONTROL OF DC-TO-DC CONVERTERS DRIVING OTHER CONVERTERS DOWNSTREAM" IEEE TRANSACTIONS ON CIRCUITS AND SYSTEMS I: FUNDAMENTAL THEORY AND APPLICATIONS, IEEE INC. NEW YORK, US, Bd. 46, Nr. 10, Oktober 1999 (1999-10), Seiten 1240-1248, XP000947139 ISSN: 1057-7122
- "Appendix 2: Product Symbols" EIBA HANDBOOK SERIES, [Online] 19. März 1999 (1999-03-19), Seiten 1-12, XP002284784 Gefunden im Internet: <URL:http://www.knx-developer.de/online/da ta/prodsym.pdf> [gefunden am 2004-06-16]

## Beschreibung

Die Erfindung bezieht sich auf ein System zur kombinierten Spannungsversorgung für Busgeräte eines Kommunikationsbusses, insbesondere der Gebäudesystemtechnik, über Spannungswandler gemäß dem Oberbegriff des Anspruchs 1; ein derartiges System ist aus der DE 101 47 924 A1 bekannt.

Ein Bus der Gebäudesystemtechnik, insbesondere der europäische Installationsbus EIB der European Installation Bus Association (EIBA), weist in der Regel ein Leitungssystem mit zwei Drähten auf, die zur Vermeidung von Störeinstrahlung verdrillt sind (twisted pair). Eine Spannungsversorgung des Busses ist üblicherweise von einem Energieversorgungsnetz, z.B. einem 230 V/50 Hz Netz, galvanisch entkoppelt. Ebenso sind an den Bus oder Kommunikationsbus angekoppelte Busgeräte, die über den Bus sowohl mit Energie versorgt werden als auch Informationen übertragen, vom Bus üblicherweise galvanisch entkoppelt. Die Busgeräte können an der Busleitung beliebig verteilt sein. Über die Busleitung erfolgt sowohl die Spannungsversorgung der Busgeräte als auch die Datenübertragung. Dies erfordert eine Entkopplung der Spannungsversorgung von der Datenübertragung in jedem Busteilnehmer. Unter Entkopplung ist hierbei zu verstehen, dass die Spannungsversorgung der Busteilnehmer die Datenübertragung nicht beeinträchtigt. Eine Beeinträchtigung würde z.B. vorliegen, wenn die Datenübertragung durch die Spannungsversorgung in den Busteilnehmern gedämpft wird und dadurch die Übertragungsreichweite abnimmt.

Eine gängige Methode zur Entkopplung ist der Einsatz eines Eingangsübertragers, wie er auch in den Busgeräten der ersten Generation eingesetzt wird. Der Eingangsübertrager bringt allerdings den Nachteil mit sich, dass er relativ groß und teuer ist. Des weiteren ist die maximale Anzahl der Busteilnehmer aufgrund der induktiven Belastung begrenzt.

Aus diesen Gründen ist eine übertragerlose Busankopplung vorzuziehen. Die Entkopplung von Spannungsversorgung und Datenübertragung muss hierbei schaltungstechnisch erfolgen. Aus der von der Anmelderin bereits eingereichten Anmeldung mit dem DE 101 47 924 Offenlegungskennzeichen ist ein Verfahren und eine Einrichtung zur übertragerlosen Spannungsversorgung eines Busgerätes eines Kommunikationsbusses, insbesondere der Gebäudesystemtechnik, über ein Schaltnetzteil bekannt.

An der Standard EIB-Applikationsschnittstelle werden 5 V/10 mA und 20 V/2 mA derzeit zur Verfügung gestellt. Diese Spannungen werden typischerweise von einer integrierten Schaltung aus dem EIB geliefert. Ein Großteil der vorhandenen Applikationen benötigt jedoch nur die 5 V Spannung mit weniger als 10 mA. Hierfür können günstigere Busankopplungen verwendet werden, die z.B. nur 5 V/7 mA zur Verfügung stellen. Wird für den Standardfall eine solche günstigere Busankopplung eingesetzt, muss es möglich sein, dass im Bedarfsfall zusätzlich 20 V bzw. 5 V mit entsprechend höherem Strom zur Verfügung gestellt werden können. Auch für den Fall, dass 5 V/10 mA bzw. 20 V/2 mA nicht ausreichend dimensioniert sind, muss die Möglichkeit vorgesehen werden können, zusätzlich Spannungsversorgungen mit 5 V bzw. 20 V und einer angepassten Stromstärke zur Verfügung zu stellen.

Der Erfindung liegt die Aufgabe zugrunde, ein besonders geeignetes und einfaches System zur Bereitstellung unterschiedlicher Spannungen und/oder Stromstärken für Busgeräte eines Kommunikationsbusses anzugeben.

Diese Aufgabe wird gelöst durch ein System zur entkoppelten Spannungsversorgung mindestens eines Busgerätes eines eine Busspannung führenden Kommunikationsbusses über Spannungswandler, dadurch gekennzeichnet, dass die Spannungswandler zur Bereitstellung unterschiedlicher Spannungen und/oder Stromstärken vorgesehen sind, wobei mehreren Spannungswandlern eine gemeinsame Entkopplung zugeordnet ist.

Der Erfindung liegt die Erkenntnis zugrunde, dass an einem Kommunikationsbus, der über eine bestimmte Busspannung verfügt, mehrere Busgeräte, die jeweils eine unterschiedliche Spannung zur Verfügung stellen, gekoppelt sein können. Bei einer kostengünstigen Implementierung eines derartigen Kommunikationsbusses, bei der preiswerte, integrierte Entkopplungen mit Spannungswandlern verwendet werden, die beispielsweise nur eine Spannung von 5 V bei einer Stromstärke von 7 mA zur Verfügung stellen können, muss es für den Nutzer des Kommunikationsbusses trotzdem möglich sein, andere Spannungen zur Verfügung zu stellen. Um dies zu realisieren, wird vorgeschlagen, mehrere Spannungsversorger bzw. Spannungswandler an den Kommunikationsbus zu koppeln, die unterschiedliche Spannungen für Applikationen bereitstellen können. Hierdurch ist eine flexible Nutzungsmöglichkeit des Kommunikationsbusses für verschiedene Anwendungsszenarien gegeben, obwohl der Kommunikationsbus standardmäßig auf preisgünstige Weise mit integrierten, standardisierten Spannungsversorgern versehen ist.

Durch die Zuordnung einer gemeinsamen Entkopplung zu mehreren Spannungswandlern, die zur Bereitstellung unterschiedlicher Spannungen und/oder Stromstärken vorgesehen sind, wird die galvanische Entkopplung der permanenten Spannungsversorgung der Busgeräte oder Busteilnehmer von der Datenübertragung nur einmal implementiert. Dies ist vorteilhaft, da eine Entkopplung mit Hilfe beispielsweise eines Übertragers bzw. einer übertragerlosen Schaltung, wie sie aus der Anmeldung mit dem Offenlegungskennzeichen DE 101 47 924 bekannt ist, nur einmal realisiert werden muss. Eine kostengünstige Spannungsversorgung kann auf diese Weise gewährleistet werden.

Eine vorteilhafte Ausbildung der Erfindung ist dadurch gekennzeichnet, dass das System eine Leiterplatte mit einer definierten Struktur zur Bestückung mit unterschiedlichen Varianten von Spannungswandlern aufweist. Hierdurch wird die Fertigung des Systems vereinfacht, da unterschiedliche Bestückungsvarianten variabel und flexibel im Rahmen der Herstellung realisiert werden können.

Eine weitere vorteilhafte Ausbildung der Erfindung ist dadurch gekennzeichnet, dass die Spannungswandler in Reihe geschaltet sind, wobei ein Spannungswandler mit höherer Ausgangsspannung als Vorgänger eines Spannungswandler mit niedrigerer Ausgangsspannung vorgesehen ist. Bei dieser günstigen Bestückungsvariante wird nur eine Entkopplung benötigt, und die Spannungsversorgung des Spannungswandlers mit der niedrigeren Ausgangsspannung kann durch die Ausgangsspannung des Spannungswandlers mit höherer Ausgangsspannung gewährleistet werden. Eine Kombination von verschiedenen Anschaltungsmöglichkeiten ist durch diese vorteilhafte Ausführung der Erfindung gegeben.

Eine weitere vorteilhafte Ausbildung der Erfindung ist dadurch gekennzeichnet, dass eine Parallelschaltung der Spannungswandler vorgesehen ist. Bei der Verwendung von nur einer Entkopplung der für die Versorgung bzw. Datenübertragung verwendeten Spannungen des Bussystems und einer anschließenden parallelen Implementierung zweier Spannungsversorger bzw. Spannungswandler mit unterschiedlichen Ausgangsspannungen wird ein höherer Wirkungsgrad erzielt, da kein Verbrauch durch einen vorgeschalteten Spannungsversorger bzw. einen Spannungswandler stattfindet. Bei dieser Kombination bzw. Bestückungsvariante ist jedoch ein geringfügig erhöhter Bauteileaufwand zu verzeichnen, da die bereits entkoppelte Spannung bei Eintritt in die beiden parallel geschalteten Spannungswandler noch einmal geregelt werden muss.

Eine weitere vorteilhafte Ausbildung der Erfindung ist dadurch gekennzeichnet, dass eine übertragerlose Entkopplung vorgesehen ist. Eine derartige übertragerlose Abzweigschaltung, die gewährleistet, dass auch während eines Sendeimpulses eine ausreichende Spannung zur Verfügung steht, lässt sich raumsparend bauen, da der Raumbedarf für einen Übertrager entfällt.

Eine weitere vorteilhafte Ausbildung der Erfindung ist dadurch gekennzeichnet, dass integrierte oder diskrete Busankopplungstechniken vorgesehen sind. Bei der Implementierung bzw. Bestückung eines Busgeräts kann somit die Technik verwendet werden, die im jeweiligen Umfeld und unter den jeweiligen Kostenaspekten am günstigsten erscheint. Dem Anwender bzw. Hersteller eines derartigen Bussystems ist somit ein größtmöglicher Freiraum in der Ausgestaltung des entsprechenden Busgeräts gegeben.

Eine weitere vorteilhafte Ausbildung der Erfindung ist dadurch gekennzeichnet, dass die Spannungswandler als Linearregler und/oder als DC/DC-Wandler ausgebildet sind. Wie bereits oben erwähnt kann der Hersteller eines derartigen Kommunikationsbusses somit auf die Bauteile zugreifen, die für seine Anwendung bzw. die entsprechende Realisierung am geeignetsten erscheinen. Eine größtmögliche Gestaltungsfreiheit bei der spezifischen Ausbildung des Busgeräts ist somit gegeben.

Im folgenden wird die Erfindung anhand der in den Figuren dargestellten Beispiele näher beschrieben.

Es zeigen:
- FIG 1: ein Standard-Kommunikationsbus mit angeschlossenen Busgeräten,
- FIG 2: eine Reihenschaltung von kombinierten Spannungsversorgern,
- FIG 3: eine parallele Schaltung von kombinierten Spannungsversorgern.

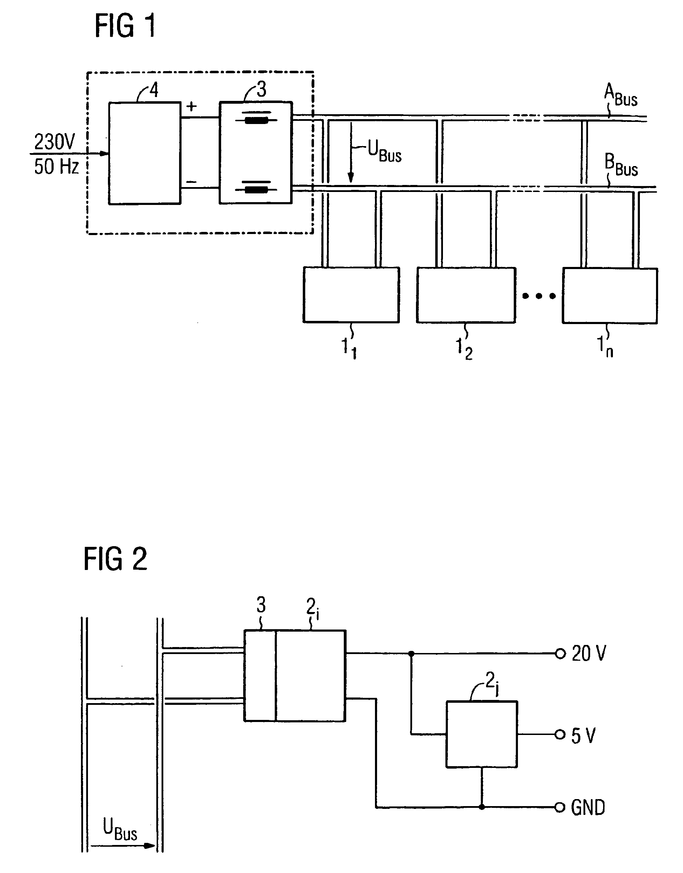

FIG 1 zeigt einen Kommunikationsbus Bus, insbesondere einen Europäischen Installationsbus EIB der European Installation Bus Association (EIBA). Eine Spannungsversorgung des Kommunikationsbusses Bus erfolgt über das Energieversorgungsnetz, beispielsweise einem 230 V/50 Hz-Netz. Die zugeführte Wechselspannung wird über einen Spannungswandler 4 in eine Gleichspannung gewandelt, die an dem Kommunikationsbus Bus als Busspannung U_{Bus} anliegt. Der Kommunikationsbus Bus weist ein Leitungssystem mit zwei Drähten A_{Bus}, B_{Bus} auf. An die Leitungen sind Busgeräte 1_{1..n} angeschlossen. Über den Kommunikationsbus Bus werden die Busgeräte 1_{1..n} mit der nötigen Spannung versorgt, es werden zusätzlich aber auch Daten von und zu den Busgeräten 1_{1..n} über den Kommunikationsbus Bus übertragen.

FIG 2 stellt ein Ausführungsbeispiel der Erfindung dar, in dem zwei Spannungsversorger 2ᵢ,2ⱼ an einen Kommunikationsbus Bus angeschlossen sind. Auf dem Kommunikationsbus Bus liegt eine Busspannung U_{Bus} an. Die Spannungsversorger bzw. Spannungswandler 2ᵢ,2ⱼ sind in dem dargestellten Ausführungsbeispiel in Reihe geschaltet. Es erfolgt eine Entkopplung 3 der Spannungsversorgung von der Datenübertragung vor dem ersten Spannungswandler 2ᵢ. Bei dem ersten Spannungsversorger bzw. Spannungswandler 2ᵢ kann es sich um einen DC/DC-Wandler oder um einen Linearregler handeln. Der erste Spannungswandler regelt die Spannung derart, dass eine Ausgangsspannung von 20 V bereitgestellt wird. Diese Ausgangsspannung dient als Eingang für den nachgeschalteten zweiten Spannungswandler 2ⱼ. Bei dem Spannungswandler 2ⱼ kann es sich ebenfalls um einen DC/DC-Wandler oder um einen Linearregler handeln. Die als Eingang für den zweiten Spannungswandler 2ⱼ verwendete Eingangsspannung von 20 V wird durch den zweiten Spannungswandler 2ⱼ auf 5 V gewandelt. Für das anschließen von Busendgeräten 1_{1..n} stehen durch die beschriebene Kombination der Spannungswandler 2ᵢ,2ⱼ unterschiedliche Spannungen als Anschaltmöglichkeiten zur Verfügung.

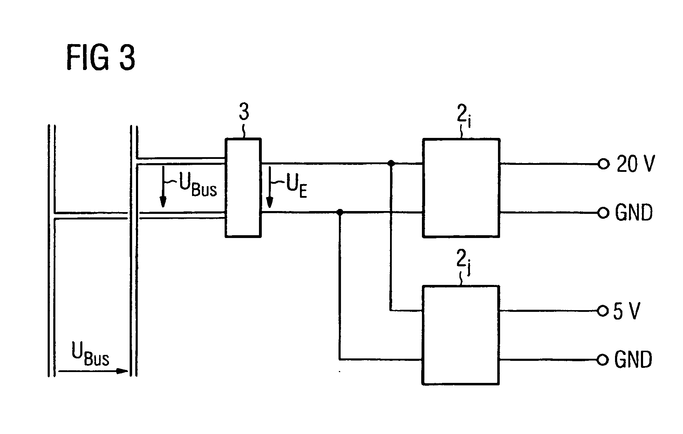

In FIG 3 ist eine weitere Ausführungsform der Erfindung dargestellt. Ein Kommunikationsbus Bus verfügt über eine Busspannung U_{Bus}. Über eine Entkopplung 3, die die Spannungsversorgung von der Datenübertragung entkoppelt, sind in dem dargestellten Ausführungsbeispiel zwei Spannungsversorgungen bzw. Spannungswandler 2ᵢ, 2ⱼ angeschlossen. Die Entkopplung regelt eine Busspannung U_{Bus}, die bei 30 V liegen kann, beispielsweise auf 28 V herunter. Die durch die Entkopplung 3 heruntergeregelte Spannung U_{E} wird als Eingangsspannung für die zwei Spannungsversorger bzw. Spannungswandler 2ᵢ, 2ⱼ verwendet. Die zwei Spannungswandler 2i, 2j wandeln diese Eingangsspannung jeweils in unterschiedliche Ausgangsspannungen Uᵢ, Uⱼ, die beispielsweise bei 5 bzw. 20 V liegen, herunter. Hierbei sind die zwei Spannungswandler 2ᵢ, 2ⱼ parallel geschaltet. Im Gegensatz zu der in Abbildung 3 dargestellten Schaltungsmöglichkeit wird bei dieser vorteilhaften Ausführung der Erfindung ein höherer Wirkungsgrad erzielt, da durch direkten Anschluss des Spannungswandlers 2ⱼ, der eine niedrigere Ausgangsspannung bereitstellt, an die bereits entkoppelte Spannung U_{E}, die als Eingangsspannung verwendet wird, kein Spannungsverlust durch den vorgeschalteten Spannungswandler 2ᵢ auftritt. Es werden bei dieser Ausführung der Erfindung jedoch mehr Bauteile benötigt, da eine weitere Regelung der Spannung U_{E} nötig ist. Durch die dargestellte Schaltung werden für Busendgeräte 1_{1..n} verschiedene Anschaltmöglichkeiten bereitgestellt, wie dies auch in dem beschriebenen Ausführungsbeispiel der FIG 2 der Fall ist.

Zusammenfassend betrifft die Erfindung ein System zur kombinierten, entkoppelten Spannungsversorgung für Busgeräte 1_{1..n} über Spannungswandler 2_{1..n.} Hierbei führt ein Kommunikationsbus(Bus)eine Busspannung U_{Bus}. Die Spannungswandler 2_{1..n} sind zur Bereitstellung unterschiedlicher Spannungen U_{1..n} und/oder Stromstärken I_{1..n} vorgesehen. Die jeweilige Kombination von Spannungswandlern 2_{1..n} kann optional in Form einer Bestückungsvariante implementiert werden, wobei eine gemeinsame Entkopplung zum Einsatz kommt.

## Patentansprüche

1. System zur entkoppelten Spannungsversorgung eines Busgerätes (1) eines eine Busspannung (U_{Bus}) führenden Kommunikationsbusses (Bus) über Spannungswandler (2_{1..n}),
**dadurch gekennzeichnet,**
**dass** die Spannungswandler (2_{1..n}) zur Bereitstellung unterschiedlicher Spannungen (U_{1..n}) und/oder Stromstärken (I_{1..n}) vorgesehen sind, wobei mehreren Spannungswandlern (2_{1..n}) eine gemeinsame Entkopplung (3) zugeordnet ist.

2. System nach Anspruch 1,
**dadurch gekennzeichnet,**
**dass** das System eine Leiterplatte mit einer definierten Struktur zur Bestückung mit unterschiedlichen Varianten von Spannungswandlern (2_{1..n}) aufweist.

3. System nach Anspruch 1,
**dadurch gekennzeichnet,**
**dass** die Spannungswandler (2_{1..n}) in Reihe geschaltet sind, wobei ein Spannungswandler (2ᵢ) mit höherer Ausgangsspannung (Uᵢ) als Vorgänger eines Spannungswandlers (2ⱼ) mit niedrigerer Ausgangsspannung (Uⱼ) vorgesehen ist.

4. System nach Anspruch 1,
**dadurch gekennzeichnet,**
**dass** eine Parallelschaltung der Spannungswandler (2_{1..n}) vorgesehen ist.

5. System nach einem der Ansprüche 1 bis 4,
**dadurch gekennzeichnet,**
**dass** eine übertragerlose Entkopplung vorgesehen ist.

6. System nach einem der Ansprüche 1 bis 5,
**dadurch gekennzeichnet,**
**dass** integrierte und/oder diskrete Busankopplungstechniken vorgesehen sind.

7. System nach einem der Ansprüche 1 bis 6,
**dadurch gekennzeichnet,**
**dass** die Spannungswandler (2_{1..n}) als Linearregler und/oder als DC/DC-Wandler ausgebildet sind.

## Claims

1. System for the decoupled voltage supply of a bus device (1) of a communication bus (Bus) carrying a bus voltage (*U*_{*BUS*}) over voltage converters (2_{1..*n*}),
**characterised in that**,
the voltage converters (2_{1..*n*}) are provided to supply different voltages (*U*_{1..*n*}) and/or current intensities (I_{1..*n*}), with a common decoupling (3) being assigned to several voltage converters (2_{1..*n*}).

2. System according claim 1
**characterised in that**
the system comprises a printed circuit board with a defined structure for equipping with different variants of voltage converters (2_{1..*n*}) .

3. System according to claim 1
**characterised in that**
the voltage converters (2_{1..*n*}) are connected in series, with a voltage converter (2_{*i*}) with a higher output voltage (*U*_{*i*}) being provided as a predecessor of a voltage converter (2_{*j*}) with a lower output voltage (U_{*j*}).

4. System according to claim 1
**characterised in that**
a parallel circuit of the voltage converters (2_{1..*n*}) is provided.

5. System according to one of claims 1 to 4
**characterised in that**
a transformerless decoupling is provided.

6. System according to one of claims 1 to 5
**characterised in that**,
integrated and/or discrete bus coupling technologies are provided.

7. System according to one of claims 1 to 6
**characterised in that**
the voltage converters (2_{1..*n*}) are configured as linear controllers and/or DC/DC converters.

## Revendications

1. Système d'alimentation découplée en tension d'un appareil de bus (1) d'un bus de communication (Bus) conduisant une tension de bus (U_{Bus}) par l'intermédiaire de convertisseurs de tension (2_{1..n}),
**caractérisé par le fait que** les convertisseurs de tension (2_{1..n}) sont prévus pour fournir différentes tensions (U_{1..n}) et/ou différentes intensités de courant (I_{1..n}), un découplage commun (3) étant associé à plusieurs convertisseurs de tension (2_{1..n}) .

2. Système selon la revendication 1,
**caractérisé par le fait que** le système comporte une carte à circuits imprimés ayant une structure définie pour l'équipement par différentes variantes de convertisseurs de tension (2_{1..n}) .

3. Système selon la revendication 1,
**caractérisé par le fait que** les convertisseurs de tension (2_{1..n}) sont branchés en série, un convertisseur de tension (2ᵢ) ayant une tension de sortie supérieure (Uᵢ) étant prévu comme précédant un convertisseur de tension (2ⱼ) ayant une tension de sortie inférieure (Uⱼ).

4. Système selon la revendication 1,
**caractérisé par le fait qu'**il est prévu un branchement en parallèle des convertisseurs de tension (2_{1..n}).

5. Système selon l'une des revendications 1 à 4,
**caractérisé par le fait qu'**il est prévu un découplage sans transformateur.

6. Système selon l'une des revendications 1 à 5,
**caractérisé par le fait qu'**il est prévu des techniques de connexion au bus intégrées et/ou discrètes.

7. Système selon l'une des revendications 1 à 6,
**caractérisé par le fait que** les convertisseurs de tension (2_{1. .n}) sont conçus comme des régulateurs linéaires et/ou comme des convertisseurs DC/DC.
